# EUROPÄISCHE PATENTSCHRIFT

(11) **EP 2 085 610 B1**
(45) Veröffentlichungstag und Bekanntmachung des Hinweises auf die Patenterteilung: **13.10.2010**
(21) Anmeldenummer: 08001625.6
(22) Anmeldetag: 29.01.2008
(51) Int. Cl.: F03D 7/02

(54) **Vertikalachsen-Windturbine mit Steuerungsvorrichtung sowie Verfahren zum aerodynamischen Bremsen**
Vertical axis wind turbine with control system and method of aerodynamic braking
Eolienne à axe verticale avec un système de contrôle et procédé de freinage aerodynamique

(43) Veröffentlichungstag der Anmeldung: 05.08.2009
(60) Teilanmeldung: 10174502.4
(73) Patentinhaber: Colling, Claus, 85408 Gammelsdorf (DE)
(72) Erfinder: Colling, Claus, 85408 Gammelsdorf (DE)
(74) Vertreter: Becker Kurig Straus

(56) Entgegenhaltungen:
- FR-A- 990 595
- GB-A- 2 227 286
- US-A- 4 111 601
- US-A- 4 180 372
- US-A- 4 355 955
- US-A- 4 565 929
- US-A- 4 692 095
- US-A- 5 456 579

## Beschreibung

### Hintergrund der Erfindung

Die vorliegende Erfindung bezieht sich auf eine Vertikalachsen-Windturbine mit Steuerungsvorrichtung und dazugehörigem Steuerungsverfahren zum aerodynamischen bremsen.

### Stand der Technik

Im Zuge der immer schneller fortschreitenden Entwicklung der Nutzung von Windenergie ist es ein allgemeines Bestreben, Windkraftanlagen bzw. Windkraftsysteme immer effizienter zu gestalten. Allerdings ist die Steuerung von Windkraftsystemen ein großes Problem, egal ob sie als Vertikalachsen-Windturbine 14 (VAWT) oder als Horizontalachsen-Windturbine (HAWT) konstruiert sind.

Vor allem bei hohen Windgeschwindigkeiten muss die Rotordrehzahl begrenzt werden, um Beschädigung oder Zerstörung der Windkraftsysteme durch übermäßige Windenergie zu verhindern. Außerdem muss es möglich sein, Windkraftsysteme für Wartungs- und Reparaturarbeiten abzuschalten, auch wenn zur gleichen Zeit Windenergie auf die Windkraftsysteme wirkt. Deshalb ist es wichtig, dass jedes Windkraftsystem eine Bremsvorrichtung beinhaltet. Herkömmliche Bremsen wie z.B. Scheiben- oder Trommelbremsen sind hierfür allerdings nicht geeignet, da sie einen hohen Verschleiß aufweisen. Außerdem muss eine Dauerbremseigenschaft gewährleistet werden.

Reibungsbasierende Bremsen können sich bei Dauerbremsung bis zum Bremsausfall aufheizen. Dieses Problem kann im Stand der Technik durch den Einsatz von verschleißfreien Wirbelstrombremsen gelöst werden. Allerdings ergibt sich hierbei das Problem, dass Wirbelstrombremsen keine individuelle Steuerung zulassen und bei Stromausfall wirkungslos sind. Auch Systeme mit verstellbaren Rotorblättern können bei Stromausfall oder Steuerungsausfall nicht mehr aus dem Wind genommen werden, so dass die Windenergie den Rotor weiter antreiben kann. Deshalb besteht ein Bedarf an einer verschleißfreien Vorrichtung zum Steuern und Bremsen von Windkraftanlagen mit einer autonomen Selbstbremsung bzw. Selbstabschaltung bei Defektsituationen. Ein zusätzliches Problem ergibt sich im Stand der Technik, wenn eine Notsituation auftritt, bei der die elektrischen Steuerungsvorrichtungen ausfallen und damit ein Abschalten der VAWT unmöglich wird.

GB 2 227 286 A offenbart ein Windturbinenblatt mit einem beweglichen Frontabschnitt an der Blattspitze, der auf einer Schwenkachse montiert ist, die es dem Frontabschnitt ermöglicht, in eine obere Schleppposition ausgelenkt zu werden, in dem er zusammen mit dem übrigen Abschnitt eine Lücke im Blatt definiert und einen hohen negativen Neigungswinkel aufweist, um einen zu schnellen Rotor zu bremsen. Der Frontabschnitt kann mechanisch durch eine Federkraft und eine Masse aktiviert werden. Da das Funktionsprinzip dieser Druckschrift auf einen propellerartigen Rotor, d.h. eine Horizontalachsen-Windturbine (HAWT) aufbaut, ist dieses Prinzip der Rotorbremsung nicht auf eine Vertikalachsen-Windturbine (VAWT) anwendbar. Genauer gesagt, die Masse wird in Längsrichtung des Windturbinenblattes bewegt, was bei einer HAWT der Richtung der Zentrifugalkraft entspricht, nicht jedoch der Richtung der Zentrifugalkraft bei einer VAWT.

US 4,692,095 A offenbart Windturbinenblätter mit festen Hebespoilern, die normalerweise an der Hochdruckseite der Blätter hervorstehen und im Fallwindbetrieb auf der Niederdruckseite hervorstehen und damit sehr effektiv werden, um eine zu hohe Rotationsgeschwindigkeit zu verhindern. Ein Computer steuert die Ausrichtung der Hebespoiler und hält damit eine konstante Rotationsgeschwindigkeit aufrecht. Da auch diese Offenbarung auf eine HAWT ausgerichtet ist, ist das hier offenbarte Prinzip nicht ohne weiteres mit einer VAWT kompatibel. Bei Computerausfall oder Stromausfall ist diese Bremsvorrichtung ebenfalls nicht mehr aktiv und dies kann zur Zerstörung der Windkraftanlage führen.

US 4,111,601 A offenbart eine Windmühle mit einem Rad, das einen Satz von festen Blättern und einen Satz von Drehschiebern aufweist, deren Ausrichtung bezüglich der Radachse automatisch eingestellt wird, um die Drehgeschwindigkeit des Rades bei hohen Windgeschwindigkeiten auf ein sicheres Maß zu begrenzen. Die festen Blätter erlauben allerdings keine Bremsung so dass bei starkem Wind immer Antriebskraft zur Verfügung steht, falls die Bremsung der Drehschieber nicht ausreicht. Zusätzlich ist dies ein Prinzip für ein HAWT und kann nicht ohne weiteres auf eine VAWT übertragen werden, da diese Drehschieber einen propellerartigen Rotor einer HAWT voraussetzen.

Ferner offeriert das Dokument FR 2491756 eine VertikalachsenWindturbine gemäß dem Oberbegriff des Anspruchs 1.

### Zusammenfassung der Erfindung

Das Problem der vorliegenden Erfindung besteht darin, eine Vertikalachsen-Windturbine bereitzustellen, die verschleißfrei zu Bremsen ist und in Defektsituationen ohne äußere Ansteuerung zum Stehen gebracht werden kann.

Dieses Problem wird erfindungsgemäß durch die Vertikalachsen-Windturbine gemäß Anspruch 1 und durch das dazugehörige Bremsverfahren gemäß Anspruch 25 gelöst. Weitere Ausführungsformen sind jeweils in den Unteransprüchen offenbart.

Die Vertikalachsen-Windturbine mit vertikaler Rotationsachse, umfasst mindestens ein Rotorblatt-Segment, das mindestenszwei ein- und ausfahrbare Strömungsschilde aufweist und wobei das Rotorblatt-Segment um die vertikale Rotationsachse drehbar gelagert ist, mindestens eine Steuerungsvorrichtung, um die Strömungsschilde zu steuern, wobei die Steuerungsvorrichtung folgendes umfasst: ein Federelement, mindestens ein Massenelement auf einer ersten Teilkomponente, wobei die erste Teilkomponente drehbar um eine Rotationsachse gelagert ist, mindestens zwei Verbindungspunkte auf der ersten Teilkomponente, an denen jeweils ein Verbindungselement angreift, welches die Steuerungsvorrichtung mit jeweils einem Strömungsschild der Vertikalachsen-Windturbine verbindet, wobei die Verbindungspunkte derart auf der ersten Teilkomponente angeordnet sind, dass sie bezüglich der Rotationsachse einander im Wesentlichen gegenüberliegen und über die Verbindungselemente bei einer Schwenkbewegung der Teilkomponente bedingt durch das Angreifen einer Zentrifugalkraft an dem Massenelement, die Strömungsschilde gegensätzlich zueinander steuern.

Das dazugehörige Verfahren umfasst ein Entkoppeln der zweiten Komponente von der dritten Komponente, Ausfahren der Strömungsschilde im Wesentlichen in eine Position bis senkrecht zur Rotationsrichtung des Rotorblatt-Segments durch Bewegen der zweiten Komponente mittels Zentrifugalkraft; Verändern der Strömungseigenschaften des Rotorblatt-Segments, um die Antriebsströmung der Vertikalachsen-Windturbine zumindest teilweise zu unterbrechen.

Die vorliegende Erfindung weist zusätzlich den Vorteil auf, dass es mit dieser Anordnung nicht nur möglich ist, eine Vertikalachsen-Windturbine 14 verschleißfrei zu bremsen, sondern auch ihre Rotationsgeschwindigkeit bei Wind verschleißfrei zu steuern. Infolge dessen ermöglicht die vorliegende Erfindung auch ein Betreiben einer Vertikalachsen-Windturbine 14 bei starken und schnell wechselnden Windverhältnissen (Windrichtung, Böen, etc.), bei denen herkömmliche Vertikalachsen-Windturbinen im Stand der Technik, abgeschaltet werden müssen, um sie vor Beschädigung zu bewahren. Demnach ist die vorliegende Erfindung vorteilhafterweise für den Einsatz in Starkwindanlagen besonders geeignet.

### Kurze Beschreibung der Zeichnungen

Figur 1 zeigt eine bevorzugte Ausführungsform der Steuerungsvorrichtung 1 gemäß der vorliegenden Erfindung in einer Explosionsansicht ohne Federelement 3.
Figur 1a zeigt die Ausführungsform von Figur 1 mit hervorgehobenen Bereichen und zusätzlichen schematischen Erläuterungen.
Figur 2 zeigt eine bevorzugte Ausführungsform der Steuerungsvorrichtung 1 gemäß der vorliegenden Erfindung mit Verbindungselementen 18.
Figur 3 zeigt ein Rotorblatt-Segment 6 mit mehreren gekoppelten Steuerungsvorrichtungen 1 gemäß der vorliegenden Erfindung
Figur 4 zeigt eine bevorzugte Ausführungsform der Steuerungsvorrichtung 1 gemäß der vorliegenden Erfindung, die in ein Rotorblatt-Segment 6 eingebaut ist und von einen Aktuator 8 angesteuert wird.
Figur 5 zeigt das Profil eines Rotorblatt-Segments 6 und eine Luftdruckverteilung beim Bremsen mit der Steuerungsvorrichtung 1 gemäß einer bevorzugten Ausführungsform der der vorliegenden Erfindung.
Figur 6 zeigt das Profil eines Rotorblatt-Segments 6 und eine Luftströmungsverteilung beim Bremsen mit der Steuerungsvorrichtung 1 gemäß einer bevorzugten Ausführungsform der der vorliegenden Erfindung.
Figur 7 zeigt ein Windkraftsystem bzw. eine Windkraftanlage vom Typ Vertikalachsen-Vertikalachsen-Windturbine 14 (VAWT).
Figur 8 zeigt einen Querschnitt im Bereich der Anströmkante 16 des Rotorblatt-Segments.

### Detaillierte Beschreibung der Erfindung

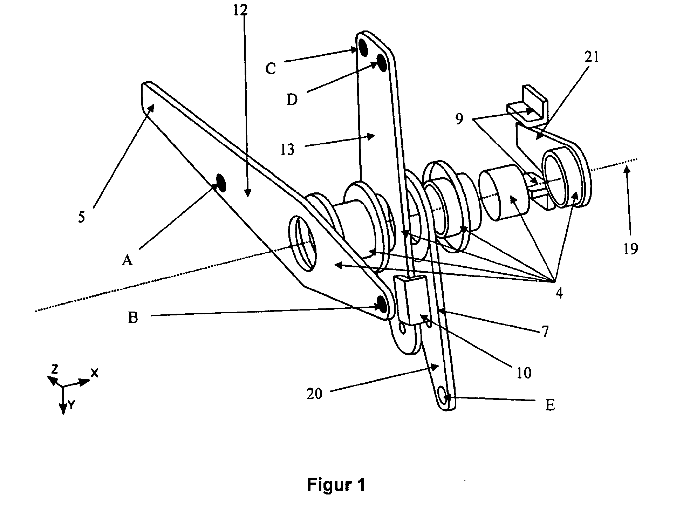

In den Figuren 1, 2, 3 und 4 sind jeweils Raumrichtungen mit drei Achsenrichtungen: x, y und z definiert, um ein leichteres Verständnis der dreidimensionalen Darstellung bereitzustellen. Dabei ist zu beachten, dass die Richtungen über alle Figuren beibehalten sind. Die x-Richtung verläuft vom Profilende 17 in Richtung der Anströmkante 16. Die y-Richtung verläuft radial bezüglich der Rotationsachse der Vertikalachsen-Windturbine 14 (VAWT) nach Außen. Die z-Richtung verläuft entlang der Länge eines Rotorblatt-Segments 6 einer VAWT von unten nach oben, d.h. von dem Fundament der VAWT senkrecht bis hin zum höchsten Punkt der VAWT.

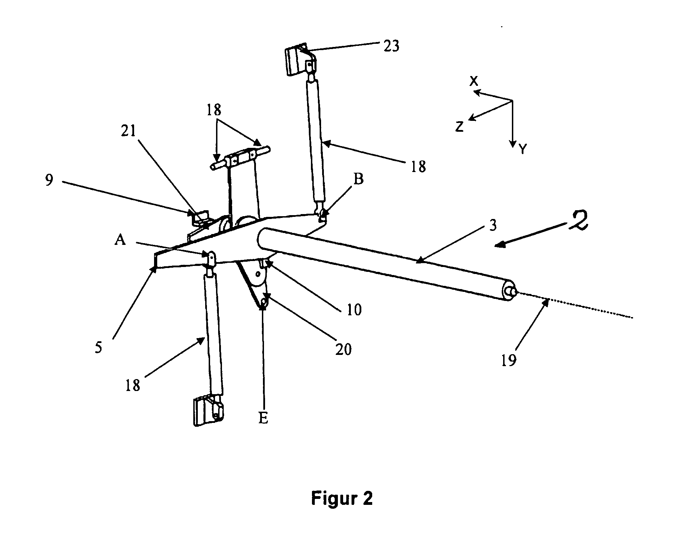

Die Steuerungsvorrichtung 1 gemäß einer Ausführungsform der vorliegenden Erfindung umfasst drei Komponenten. Die erste Komponente 2 umfasst mindestens ein Federelement 3, um die aerodynamische Bremse bzw. die Strömungsschilde in Richtung einer eingefahrenen Position vorzuspannen. Somit übt dieses Federelement 3 eine Vorspannkraft auf die aerodynamische Bremse bzw. die Strömungsschilde aus. Die eingefahrene Position entspricht einem Nicht-Betätigen der aerodynamischen Bremse bzw. die Strömungsschilde. Vorzugsweise ist das Federelement 3 als ein Torsionselement ausgeführt, wie in Fig. 2 zu sehen ist. Dieses Torsionselement wird in einer Ausführungsform der vorliegenden Erfindung (Fig. 2) derart im Rotorblatt-Segment 6 platziert, dass seine Dreh- bzw. Torsionsachse von der Anströmkante 16 zum Profilende 17 des Rotorblatt-Segments 6 verläuft, kann erfindungsgemäß aber auch auf andere Weise eingebaut werden und hängt von den jeweiligen Anforderungen wie z.B. verfügbarer Raum oder bereits vorgegebenen Innenkonstruktionen ab. Diese Vorspannung hält die aerodynamische Bremse bzw. die Strömungsschilde in einer eingefahrenen Position, in der keine Bremswirkung entsteht. Allerdings können auch andere Arten von Federelementen 3 benutzt werden, wie z.B. Gasdruckfedern, hydraulische Federn, Blattfedern oder Spiralfedern und sind je nach Anforderung, die an die Vertikalachsen-Windturbine 14 gestellt werden, auszuwählen.

In Figur 1 sind einzelne Teile der zweiten 4 und dritten 7 Komponente einer Ausführungsform der Erfindung gezeigt. Die Pfeile bezüglich der Bezugszeichen 4 und 7 bezeichnen nur die Zugehörigkeit der Teile zu einzelnen Komponenten und die einzelnen Teile, welche deshalb zumeist noch mit teilespezifischen Bezugszeichen versehen sind. Die zweite Komponente 4 umfasst mindestens ein Massenelement 5, um die aerodynamische Bremse bzw. die Strömungsschilde durch eine ausreichend hohe Rotation des Rotorblatt-Segments 6 verursachte Zentrifugalkraft gegen die Vorspannung des Federelements 3 auszufahren, wie in Fig. 1 zu sehen ist. In einer bevorzugten Ausführungsform ist das Massenelement 5 derart positioniert, dass die Zentrifugalkraft eine Radialbewegung des Massenelements 5 bezüglich der Rotationsachse der Vertikalachsen-Windturbine 14, d.h. in y-Richtung und damit im Wesentlichen senkrecht zur Längsachse des Rotorblatt-Segments erzeugt, die über eine erste Teilkomponente, wie z.B. eine Hebelvorrichtung eine Kraft aufbringt, um die aerodynamische Bremse bzw. die Strömungsschilde gegen die Vorspannung des Federelements 3 auszufahren.

Die ausgefahrene Position entspricht einem Betätigen der aerodynamischen Bremse (Fig. 1 und Fig. 2). Es ist auch eine Ausführungsform der Erfindung möglich, in der die erste Komponente 2 kein Federelement 3 enthält bzw. die zweite Komponente 4 die Aufgabe der ersten Komponente 2 zusätzlich übernehmen kann. Dazu kann das Massenelement 5 derart positioniert werden, dass die Gewichtskraft des Massenelements 5 die Vorspannung der aerodynamischen Bremse bzw. der Strömungsschilde 22 in Richtung einer eingefahrenen Position verursacht, indem über eine Hebelvorrichtung und/oder eine Getriebevorrichtung zur Kraftumsetzung verwendet wird. Somit wirkt die Gewichtskraft des Massenelements 5 in negativer z-Richtung als Vorspannkraft, während die Zentrifugalkraft das Massenelement 5 radial bezüglich der Rotationsachse 15 der Vertikalachsen-Windturbine 14 nach Außen, d.h. in y-Richtung im Wesentlichen senkrecht zur Längsachse des Rotorblatt-Segments drückt.

Wenn sich die Vertikalachsen-Windturbine 14 dreht, wird das Massenelement 5 durch die Zentrifugalbeschleunigung radial nach Außen (y-Richtung in Fig. 1, 2, 3 und 4) getrieben und fährt dadurch die aerodynamische Bremse bzw. die Strömungsschilde 22 aus, die gegen die Drehung der Vertikalachsen-Windturbine 14 arbeitet und diese dadurch bremst. Diese Bewegung des Massenelements wird über die erfindungsgemäße Anordnung einer bevorzugten Ausführungsform auf die aerodynamische Bremse bzw. die Strömungsschilde 22 übertragen, wie in Fig. 2 zu sehen ist. Fig. 2 zeigt eine zusammengebaute Ausführungsform der vorliegenden Erfindung inklusive der ersten Komponente, welche das Federelement 3 umfasst. Hier sind Verbindungselemente 18, z.B. Schubstangen, jeweils an den Verbindungspunkten A und B bewegbar derart angebracht, dass beim Bremsen ein Verbindungselement jeweils in y-Richtung und in negativer y-Richtung bewegt wird. Selbstverständlich ist die vorliegende Erfindung nicht auf zwei derartige Schubstangen beschränkt. Es können beliebig viele derartige Schubstangen angebracht werden. Auch eine Ausführungsform mit nur einer einzigen Schubstange ist denkbar. Die aerodynamische Bremse bzw. die Strömungsschilde 22 bewirken bei vollständiger Bremsung (100%) ein nahezu vollständiges Unterbrechen der Antriebsströmung für die Vertikalachsen-Windturbine 14. Dies wird nachfolgend noch detaillierter erläutert.

In einer bevorzugten Ausführungsform weist die zweite Komponente 4 eine erste Teilkomponente 12 mit einem ersten und einem zweiten Ende auf. Die erste Teilkomponente 12 ist zwischen ihrem ersten und zweiten Ende senkrecht zur Rotationsachse 19 des Torsionselements fest mit dem Torsionselement verbunden. Gemäß dieser bevorzugten Ausführungsform umfasst die zweite Komponente 4 weiter eine zweite Teilkomponente 13 mit einem ersten und einem zweiten Ende, wobei die zweite Teilkomponente 13 zwischen seinem ersten und zweiten Ende ebenfalls senkrecht zur Rotationsachse 19 des Torsionselements fest mit dem Torsionselement in analoger Weise wie die erste Teilkomponente 12 verbunden und senkrecht zur ersten Teilkomponente ist (siehe Fig. 1). Die erste und zweite Teilkomponente 12 bzw. 13 können aber auch in anderen Winkelverhältnissen zueinander befestigt sein und die Winkelverhältnisse können vom Fachmann bedarfsabhängig angepasst werden. Sogar eine variable Anpassung der Winkelverhältnisse im laufenden Betrieb der vorliegenden Erfindung ist in einer weiteren Ausführungsform möglich. Diese Teilkomponenten können z.B. Hebelvorrichtungen wie Stangen, Rohre oder Ähnliches sein.

Die erste Komponente 2 ist wirkend mit der zweiten Komponente verbunden. Dabei kann es sich um eine direkte Verbindung handeln indem die erste 2 und die zweite Komponente 4 durch Schweißen, Löten oder Schrauben direkt verbunden werden. Es können aber auch Zwischenelemente zwischen der ersten und der zweiten Komponente eingefügt werden, um eine indirekte Verbindung zwischen der ersten und zweiten Komponente über ein oder mehrere Zwischenelemente herzustellen. Diese Zwischenelemente können z.B. Getriebevorrichtungen sein, die eine Kraftumlenkung bewirken. Demzufolge ist es möglich, dass sich in verschiedenen Ausführungsformen der Erfindung Torsionselement und Massenelement 5 in gleicher Rotationsrichtung oder gegenläufig bewegen können. Die Teilkomponenten müssen nicht zwangsläufig symmetrisch sein.

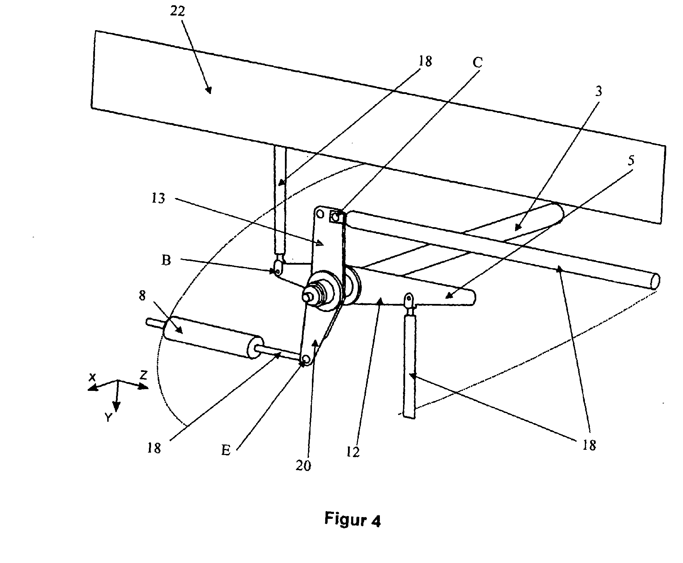

In einer Ausführungsform der Erfindung ist dieses Massenelement 5 vorteilhafterweise direkt auf dem ersten Ende der ersten Teilkomponente angebracht (Fig. 1 und Fig. 4). Das Massenelement 5 kann aber auch durch Form und Materialwahl der ersten Teilkomponente selbst bereitgestellt werden, so dass kein zusätzliches Massebauteil an der ersten Teilkomponente angebracht werden muss. Wenn die Vertikalachsen-Windturbine 14 in Betrieb ist, wird durch dieses Massenelement 5 erfindungsgemäß mechanische Energie gespeichert, da durch die Rotation der Vertikalachsen-Windturbine 14 eine Zentrifugalkraft bzw. Zentrifugalbeschleunigung auf dieses Massenelement 5 wirkt, die versucht, das Massenelement 5 radial bezüglich der Rotationsachse 15 der Vertikalachsen-Windturbine 14 nach Außen (y-Richtung) zu beschleunigen.

Die dritte Komponente 7 umfasst einen Aktuator 8 (Fig. 4), der angesteuert werden kann, um die Strömungsschilde 22 gegen die Vorspannung des Federelements 3 bzw. gegen die Vorspannung durch die Gewichtskraft des Massenelements 5 gemäß zuvor erwähnten Ausführungsform auszufahren. Diese dritte Komponente 7 kann so angesteuert werden, dass die aerodynamische Bremse mittels einer Kopplungsvorrichtung 10, die nachstehend genauer beschrieben wird, in ausgefahrener Position, in eingefahrener Position und in jeder Zwischenposition zwischen ausgefahrener und eingefahrener Position bewegt und gehalten werden kann. Die Zwischenpositionen stellen damit eine wahlweise einstellbare aerodynamische Teilbremsung (zwischen 0% und 100%, wobei 0% der vollständig eingefahrenen Position und 100% der vollständig ausgefahrenen Position entspricht) der Vertikalachsen-Windturbine 14 dar, während die vollständig ausgefahrene aerodynamische Bremse bzw. die vollständig ausgefahrenen Strömungsschilde 22 eine vollständige aerodynamische Bremsung der Vertikalachsen-Windturbine 14 darstellen. Der Aktuator 8 weist in einer bevorzugten Ausführungsform einen Stellmotor auf, der über mindestens ein Verbindungselement 18, z.B. eine Schubstange, an mindestes einem Hebelarm 20 befestigt ist. In der bevorzugten Ausführungsform ist dieser Hebelarm 20 drehbar auf dem Torsionselement gelagert, wie in Figur 4 zu sehen ist.

Die dritte Komponente 7 kann auch ein Rückstellelement (nicht gezeigt) aufweisen, das den Aktuator 8 veranlasst, die aerodynamische Bremse bzw. die Strömungsschilde 22 gegen die Vorspannung des Federelements 3 auszufahren, wenn der Aktuator 8 nicht angesteuert werden kann oder einen Defekt aufweist. Dies ist vor allem für die Situation vorgesehen, dass keine Zentrifugalkraft zur Verfügung steht, um die aerodynamische Bremse bzw. die Strömungsschilde 22 gegen die Vorspannung des Federelements 3 auszufahren, d.h. wenn die Vertikalachsen-Windturbine 14 nicht rotiert. Bei diesem Rückstellelement kann es sich z.B. um ein weiteres Federelement handeln.

Erste, zweite und dritte Komponente 7 können mit Begrenzern 9 versehen sein, welche die Bewegungsfreiheit der einzelnen Komponenten auf einen vorher festgelegten Einstellungsbereich begrenzen. Je nach Ausführungsform können ein oder mehrere Begrenzer 9 an einer oder mehreren Komponenten verwendet werden. Die bevorzugte Ausführungsform, z.B. in Fig. 1 und 2 weist Begrenzer 9 für die zweite Komponente 4 auf, welche die maximal möglichen Einstellungen der zweiten Komponente, und, durch deren feste Verbindung mit der ersten Komponente, auch die maximal möglichen Einstellungen der ersten Komponente definieren. Dazu beinhaltet die zweite Komponente 4, wie in Fig. 1 zu sehen ist, einen Anschlagarm 21. Dieser Anschlagarm 21 stößt an den vorher festgelegten Positionen der Begrenzer 9 gegen eben diese Begrenzer 9 und sorgt somit dafür, dass der Bewegungsfreiraum der zweiten Komponente begrenzt ist. Das Federelement 3 sorgt dafür, dass in der eingefahrenen Position der Anschlagarm 21 gegen den dazugehörigen Begrenzer 9 gedrückt wird. Dieser Anschlagarm 21 kann auch für jede Komponente der vorliegenden Erfindung bereitgestellt werden. Die Teilkomponenten können selber als Anschlagarm 21 für Begrenzer 9 dienen, so dass darüber hinaus ein Anschlagarm 21 als Zusatzbauteil wie in der bevorzugten Ausführungsform aus Fig. 1 entfallen kann.

Um eine wirkende Verbindung zwischen der zweiten Komponente 4 und der dritten Komponente 7 bereitzustellen wird erfindungsgemäß eine Kopplungsvorrichtung 10 bereitgestellt. In einer bevorzugten Ausführungsform der Erfindung ist diese Kopplungsvorrichtung 10 an der zweiten Komponente 4 angebracht, um die zweite 4 und dritte Komponente 7 wahlweise zu koppeln oder zu entkoppeln. Wie in Fig. 1 zu sehen ist, ist die Kopplungsvorrichtung 10 gemäß der vorliegenden Erfindung am zweiten Ende der zweiten Teilkomponente 13 angebracht, und verbindet dadurch die zweite Teilkomponente 13 wirkend mit dem Aktuator 8 der dritten Komponente 7. Gemäß einer anderen bevorzugten Ausführungsform kann die Kopplungsvorrichtung 10 auch an der dritten Komponente 7, oder genauer am Hebelarm 20 des Aktuator 8, platziert sein, um die dritte Komponente 7 mit der zweiten Komponente wirkend wahlweise zu koppeln oder zu entkoppeln. Wenn die Kopplungsvorrichtung 10 sich an der zweiten Komponente befindet, kann die dritte Komponente 7 ein entsprechendes Gegenstück aufweisen, um die Kopplung zu sichern. Im umgekehrten Fall gilt Entsprechendes. Dieses Gegenstück ist dementsprechend Teil der Kopplungsvornchtung 10.

Diese Kopplungsvorrichtung 10 ist in der Lage, die Verbindung zwischen erster 2 und zweiter 4 Komponente einerseits, und der dritten Komponente 7 andererseits, zu lösen und wiederherzustellen.

Solange die Kopplungsvorrichtung 10 die Verbindung zwischen erster 2 und zweiter 4 Komponente auf der einen Seite und dritter Komponente auf der anderen Seite aufrecht erhält, übt die dritte Komponente 7 eine einstellbare bzw. steuerbare Kraft auf die erste 2 und zweite Komponente 4 aus, so dass es dem Massenelement 5 trotz der durch Rotation der Vertikalachsen-Windturbine 14 entstehenden Zentrifugalbeschleunigung bzw. Zentrifugalkraft, nicht möglich ist, die Vorspannkraft des Federelements 3 zu überdrücken. Das Bewegungsverhalten und die jeweilige Position der aerodynamischen Bremse bzw. die Strömungsschilde 22 wird von dem Aktuator 8 dominiert bzw. bestimmt. Wenn sich die aerodynamische Bremse bzw. die Strömungsschilde 22 in einer Zwischenstellung zwischen ausgefahrener und eingefahrener Position befinden, wird diese Position durch die dritte Komponente 7, die den Aktuator 8 umfasst, gehalten ohne dass es dem Massenelement 5 möglich ist, die aerodynamische Bremse bzw. die Strömungsschilde 22 durch die bei Rotation der Vertikalachsen-Windturbine 14 herrschende Zentrifugalkraft in die ausgefahrene Position zu bringen. Die dritte Komponente 7 ist damit derart ausgelegt, dass sie entgegen der Wirkungen von Federelement 3 bzw. Gewichtskraft und Zentrifugalkraft des Massenelements 5 jede mögliche Positionierung der aerodynamischen Bremse bzw. der Strömungsschilde 22 einstellen und halten kann, solange die Kopplungsvorrichtung 10 die Verbindung zwischen erster und zweiter Komponente auf der einen Seite und dritter Komponente auf der anderen Seite aufrechterhält. Anders gesagt, wird damit sichergestellt, dass die Steuerung der aerodynamischen Bremse bzw. der Strömungsschilde 22 ausschließlich durch die dritte Komponente 7 erfolgt, solange die Kopplungsvorrichtung 10 die Verbindung zwischen erster und zweiter Komponente auf der einen Seite und dritter Komponente auf der anderen Seite aufrechterhält.

Wenn die Kopplungsvorrichtung 10 die Verbindung zwischen erster und zweiter Komponente auf der einen Seite und dritter Komponente auf der anderen Seite aufhebt bzw. die dritte Komponente 7 von den anderen Komponenten entkoppelt, wird die positionsbestimmende Wirkung der dritten Komponente aufgehoben, die, wie zuvor erwähnt, über die Kopplungsvorrichtung 10 auf die anderen Komponenten übertragen wird. In diesem entkoppelten Zustand wird das Massenelement 5 der zweiten Komponente nicht mehr von der dritten Komponente festgehalten. Damit wird die, bei Rotation der Vertikalachsen-Windturbine 14 bestehende Zentrifugalkraft, bzw. Zentrifugalbeschleunigung das Massenelement 5 radial bezüglich der Rotation der Vertikalachsen-Windturbine 14 nach Außen bewegen (y-Richtung), d.h. im Wesentlichen senkrecht zur Längsachse des Rotorblatts. Da dieses Massenelement 5 durch die Zentrifugalkraft die Wirkung des Federelements 3 überdrücken kann, wird die aerodynamische Bremse bzw. werden die Strömungsschilde 22 in dieser Situation dazu veranlasst, sich von der momentanen Position, d.h. von der eingefahrenen Position oder irgendeiner Zwischenposition, sich in die vollständig ausgefahrene Position zu bewegen. Dadurch wird die aerodynamische Bremsung vollständig aktiviert, die Antriebsströmung der Vertikalachsen-Windturbine 14 im besten Falle vollständig unterbrochen und die Rotation der Vertikalachsen-Windturbine 14 verlangsamt sich bis hin zum Stillstand.

Diese Entkopplung der dritten Komponente von den anderen Komponenten kann durch verschiedene Gegebenheiten ausgelöst werden. Beispielsweise kann manuell ein Schalter oder Knopf (nicht gezeigt) betätigt werden, der das Entkoppeln verursacht. Ebenso ist es möglich, dieses Entkoppeln durch Befehle einer elektronischen Steuerung oder eines Computers zu verursachen. In einer Ausführungsform der Erfindung wird dieses Entkoppeln durch eine Stromunterbrechung verursacht, die eintritt, sobald ein Fehler, ein Defekt oder ein Versagen irgendeiner Komponente der VAWT eintritt. Damit wird ein automatisches Notabschalten der Rotation der Vertikalachsen-Windturbine 14 bewirkt, ohne dass ein aktiver Befehl durch einen Bediener oder einer Software gegeben werden muss. Gemäß anderer Ausführungsformen der Erfindung ist es auch vorgesehen, dieses Entkoppeln durch verschiedene Gegebenheiten auszulösen. Die Kopplungsvorrichtung 10 kann sowohl durch manuelles Schalten, durch elektronische Befehle als auch selbstständig betätigt werden. In der bevorzugten Ausführungsform der Erfindung umfasst die Kopplungsvorrichtung 10 eine magnetische Kopplung. Dabei wird dauerhaft mindestens ein Elektromagnet mit Strom versorgt, um die Kopplung bzw. Verbindung zwischen erster und zweiter Komponente auf der einen Seite und dritter Komponente auf der anderen Seite aufrechtzuerhalten. Sobald der Strom unterbrochen wird, bricht das dadurch erzeugte Magnetfeld zusammen, löst die Kopplung bzw. Verbindung und die dritte Komponente 7 bzw. der Aktuator 8 verliert seinen dominierenden Einfluss auf die Position der aerodynamischen Bremse bzw. der Strömungsschilde 22, d.h. Aktuator 8 und aerodynamische Bremse sind entkoppelt. Infolge dessen, wird die im Massenelement 5 gespeicherte kinetische Energie freigesetzt und dadurch die aerodynamische Bremse bzw. die Strömungsschilde 22 ausgefahren.

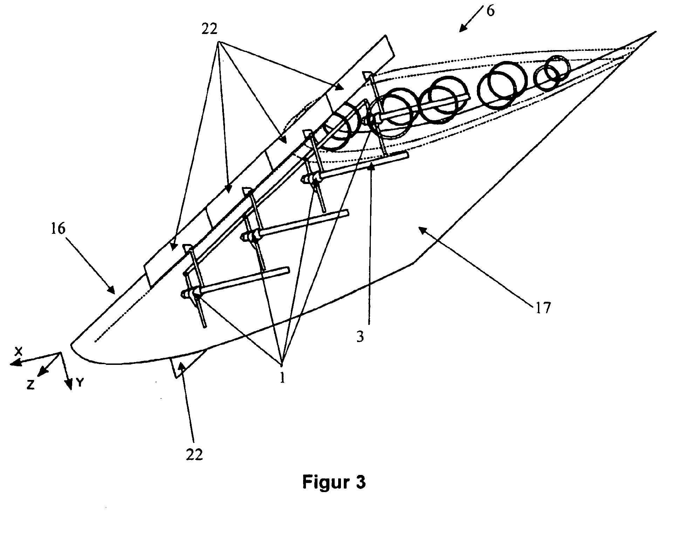

Die aerodynamische Bremse bzw. die Strömungsschilde 22 umfasst bzw. umfassen mindestens eine Klappvorrichtung bzw. eine Schildflächenvorrichtung, die an einem Rotorblatt-Segment 6 einer Vertikalachsen-Windturbine 14 angebracht ist und mit der Steuerungsvorrichtung 1 über mindestens ein Verbindungselement 18 und/oder mindestens eine Scharniervorrichtung 23 verbunden ist. Vorzugsweise ist dieses Verbindungselement 18 ein Rohr- oder Stangenelement. Diese Klappvorrichtung ist in einer Ausführungsform ein Windschild bzw. Strömungsschild 22, das mit einer Ebene bzw. Oberfläche so in die Antriebsströmung gestellt werden kann, dass die Antriebsströmung bei vollständiger Bremsung im Wesentlichen unterbrochen wird. Es kann gemäß der vorliegenden Erfindung auch ein Strömungsschild 22 bereitgestellt sein, das direkt aus dem Innenraum des Rotorblatt-Segments 6 in einem bestimmten Winkel zum Rotorblatt-Segment herausgedrückt wird. In einer solchen Ausführungsform wäre keine Scharniervorrichtung 23 nötig. Bei einer Teilbremsung, was einem Steuern des Drehmomentverlaufs der Vertikalachsen-Windturbine 14 entspricht, wird die Antriebsströmung wahlweise beeinflusst. Vorzugsweise wird die Oberfläche derart in die Antriebsströmung gestellt, dass die Antriebsströmung möglichst senkrecht auf die Oberfläche trifft, um einen möglichst großen Strömungswiderstand zu erreichen, wenn die Vertikalachsen-Windturbine 14 einer vollständigen Bremsung unterliegen soll. Im Falle einer Teilbremsung wird dieses Strömungsschild 22 selbstverständlich nur teilweise ausgeklappt. In einer Ausführungsform der Erfindung umfasst die Klappenvorrichtung zwei Strömungsschilde 22 pro Steuerungsvorrichtung 1. Es ist aber auch nur ein Strömungsschild 22 oder mehrere Strömungsschilde 22 pro Steuerungsvorrichtung möglich. Diese Ausführungsform, wie sie in Fig. 3 und 4 zu sehen ist, umfasst ein inneres und ein äußeres Strömungsschild 22. Alle Strömungsschilde 22 sind mit deren dazugehörigen Steuerungsvorrichtungen 1 derart verbunden, dass die in der eingefahrenen Position eng an der Oberfläche des Rotorblatt-Segments 6 anliegen, d.h. eingefahren sind, und in der ausgefahrenen Position mit ihrer Oberfläche im Wesentlichen senkrecht bezüglich der Antriebsströmung sind. Gemäß einer Ausführungsform der Erfindung werden bei einem Bremsvorgang gegenüberliegende Strömungsschilde 22 gegensätzlich zu einander ausgefahren um, da sie auf gegenüberliegenden Seiten des Rotorblatts angebracht sind, um auf der jeweiligen Seite die Antriebsströmung zu beeinflussen. Es ist auch möglich, dass die Strömungsschilde 22 in einer Vertiefung des Rotorblatt-Segments 6 in der eingefahrenen Position platziert sind und beim Ausfahren diese Vertiefung zumindest teilweise verlassen. In einer bevorzugten Ausführungsform sind mehrere Strömungsschilde 22 über verbundene Teilkomponenten, wie z.B. die zweite Teilkomponente 13 derart miteinander verbunden, dass die Bewegungen der Strömungsschilde 22 gleichförmig und/oder symmetrisch sind. Die Strömungsschilde 22 können aber auch derart über verbundene Teilkomponenten miteinander verbunden sein, dass deren Bewegung asymmetrisch gekoppelt ist, d.h. dass die Strömungsschilde 22 gleichzeitig oder auch zeitversetzt in Positionen ausgefahren werden, die sich voneinander unterscheiden. Dazu nötige mechanische Hebelumsetzungen sind dem Fachmann bekannt und werden hier nicht näher erläutert.

In der Ausführungsform in Fig. 3 wird die aerodynamische Bremse bzw. werden die Strömungsschilde 22 symmetrisch bewegt. Es ist erfindungsgemäß aber auch möglich, die Strömungsschilde 22 asymmetrisch zueinander zu bewegen. Dies kann bedarfsabhängig leicht eingestellt werden, indem verschiedene Längen der Verbindungselemente 18 oder verschiedene Übersetzungen verwendet werden, z.B. können dazu in dieser Ausführungsform die Verbindungselemente 18 in unterschiedlichem Abstand zum Federelement 3 (hier ein Torsionselement) an der zweiten Komponente angebracht werden.

Es können auch mehrere Steuerungsvorrichtungen 1 gekoppelt betrieben werden, wie in Fig. 3 zu sehen ist. Diese sind über Verbindungselemente 18 miteinander verbunden, die bewegbar an der jeweiligen Steuerungsvorrichtung 1 angebracht werden. In der bevorzugten Ausführungsform sind Verbindungselemente 18 an den Punkten C und D mit der zweiten Komponente 4 verbunden. Damit kann das Ausfahren und Einfahren eines Strömungsschildes 22 oder Strömungsschildpaares 22 auf weitere Strömungsschilde 22 übertragen werden.

Ein Rotorblatt-Segment 6 kann somit auch mehrere Steuerungsvorrichtungen 1 beinhalten. Außerdem kann ein Rotorblatt aus mehreren Rotorblatt-Segmenten 6 bestehen, die Steuerungsvorrichtungen 1 beinhalten. Rotorblätter mit Steuerungsvorrichtungen 1 können aber auch in anderen Bereichen eingesetzt werden.

Insgesamt wird demzufolge auch ein erfindungsgemäßes Steuerungsverfahren zum aerodynamischen Bremsen einer VAWT mit einer Steuerungsvorrichtung 1 gemäß der vorliegenden Erfindung offenbart. Dieses Bremsverfahren kann manuell von einem Bediener, elektronisch von z.B. einem Computer oder auch selbstständig ausgelöst werden. Das selbstständige Auslösen basiert auf einem Defekt oder einer Fehlfunktion im Windkraftsystem. Das erfindungsgemäße Verfahren umfasst zuerst ein Entkoppeln der zweiten Komponente vom der dritten Komponente. Vorzugsweise geschieht dies über eine Kopplungsvorrichtung 10, z.B. eine Magnetkopplung. In einer Ausführungsform der Erfindung wird eine Magnetkopplung ständig mit elektrischem Strom versorgt, um die Kopplung zwischen zweiter und dritter Komponente aufrechtzuerhalten. Bei einem Defekt oder einer Fehlfunktion im Windkraftsystem, insbesondere der Steuerungsvorrichtung 1 ist die Stromversorgung unterbrochen und die Kopplung zwischen zweiter 4 und dritter Komponente 7 wird aufgehoben und die zweite 4 und dritte Komponente 7 werden entkoppelt.

In Reaktion auf das Entkoppeln von zweiter und dritter Komponente wird die aerodynamische Bremse bzw. die Strömungsschilde 22 im Wesentlichen in die Position bis senkrecht zur Rotationsrichtung des Rotorblatt-Segments 6 durch Bewegen der zweiten Komponente mittels Zentrifugalkraft ausgefahren. Genauer gesagt werden die Strömungsschilde 22 derart in den Wind gestellt, dass sie möglichst senkrecht zur Antriebsströmung des Windes stehen. Daraufhin werden die Strömungseigenschaften des Rotorblatt-Segments 6 derart verändert, dass die Antriebsströmung des Windkraftsystems unterbrochen wird. Durch den Wegfall der Antriebsströmung kann die Vertikalachsen-Windturbine 14 keine Windenergie mehr aufnehmen. Zusätzlich bilden die senkrecht zur Antriebsströmung des Windes gestellten Strömungsschilde 22 ein Hindernis für die Windströmung, so dass dadurch die Rotation der Vertikalachsen-Windturbine 14 gebremst wird. Dies kann bis zum völligen Erliegen der Rotation führen, was in ein Abschalten des Windkraftsystems mündet. Selbstverständlich sind alle Ausführungsformen der vorliegenden Erfindung untereinander kombinierbar.

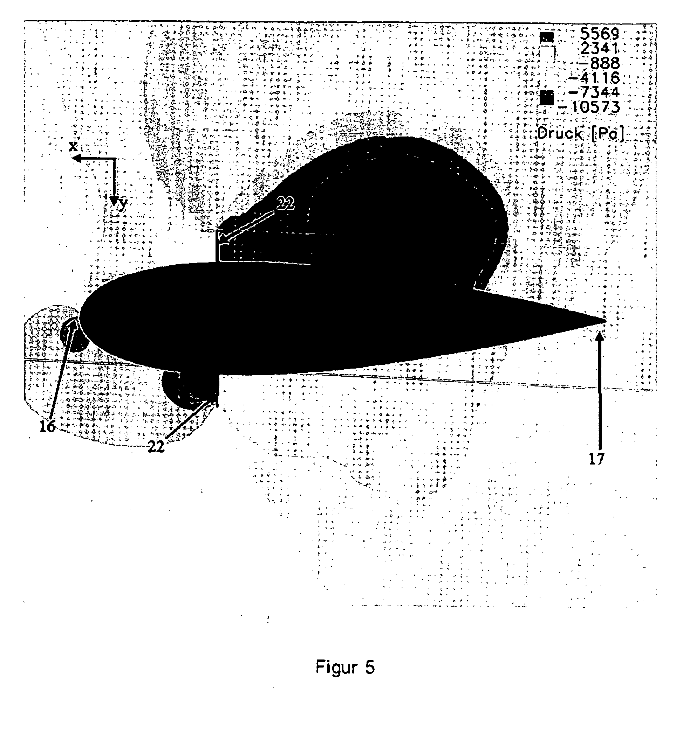

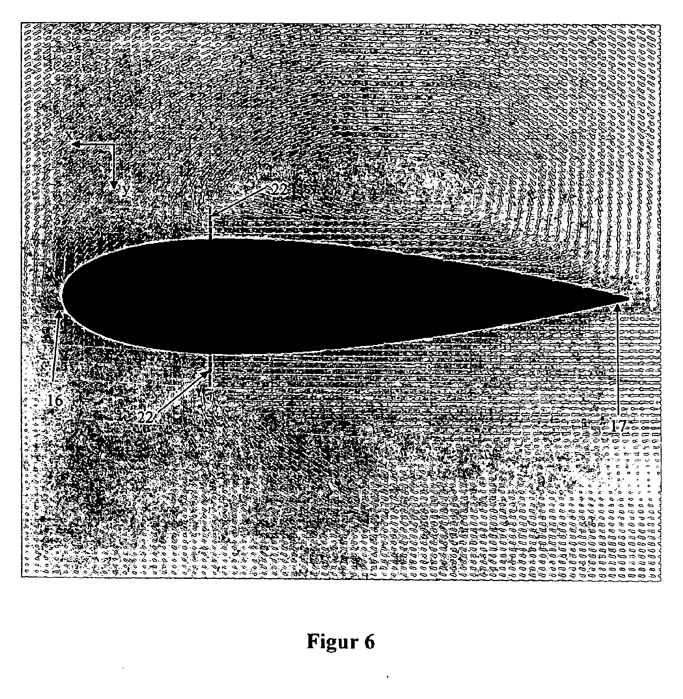

Fig. 5 und Fig. 6 veranschaulichen die Bremswirkung der aerodynamischen Bremse bzw. die Strömungsschilde 22 gemäß einer Ausführungsform der vorliegenden Erfindung. In beiden Figuren ist das Profil eines Rotorblatt-Segments 6 dargestellt. Fig. 5 zeigt eine Luftdruckverteilung und Fig. 6 zeigt eine Luftströmungsverteilung in einer Bremssituation. In Fig. 6 ist deutlich zu sehen dass die Strömungsschilde 22 eine Barriere für die Antriebsströmung aus Richtung der Anströmkante 16 bilden, so dass die Antriebsströmung unterbrochen wird, und im Bereich hinter der Strömungsschild 22 bzw. am Profilende 17 eine Strömungsumkehr stattfindet. Das Rotorblatt-Segment 6 kann damit keine Windenergie mehr in Rotationsenergie umwandeln. Die Luftdruckverteilung in Fig. 5 zeigt, dass hinter dem Strömungsschild 22 bzw. am Profilende 17 ein negativer Luftdruck im Vergleich zum Umgebungsdruck als Null-Niveau herrscht, dessen Kraftwirkung gegen die Bewegungsrichtung des Rotorblatt-Segments 6 wirkt. Vor dem Strömungsschild 22 und an der Anströmkante 16 hingegen baut sich ein positiver Luftdruck bzw. ein Überdruck im Vergleich zum Umgebungsdruck als Null-Niveau auf. Dieser wirkt ebenfalls gegen die Bewegungsrichtung des Rotorblatt-Segments 6. Dadurch wird die Rotation des Rotorblatt-Segments 6 gebremst. Selbstverständlich können alle Ausführungsformen der vorliegenden Erfindung miteinander kombiniert werden.

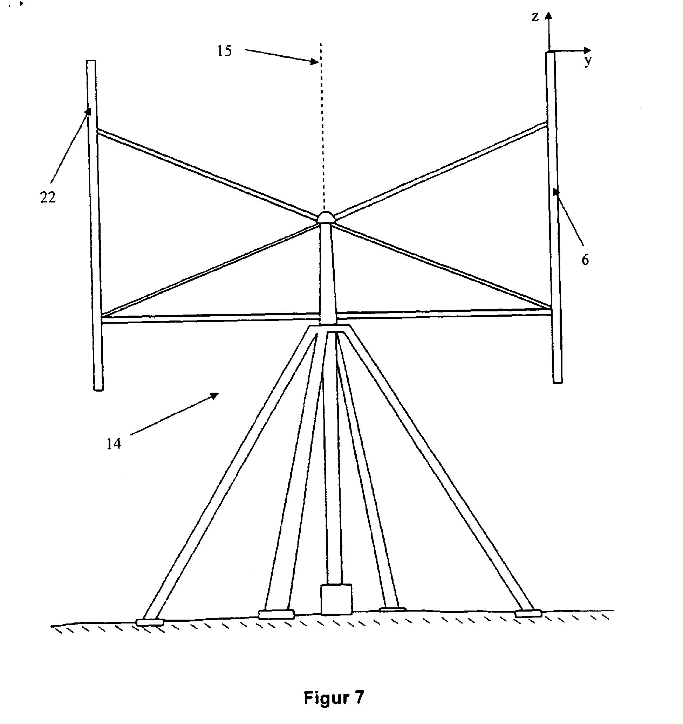

Eine VAWT umfasst mindestens einer Rotor mit mindestens einem Rotorblatt-Segment 6, das eine Steuerungsvorrichtung 1 für eine aerodynamische Bremse beinhaltet, und mindestens eine Energie-Umwandlervorrichtung. Diese Energie-Umwandlervorrichtung kann z.B. ein Generator sein, der mechanische Energie, die durch Rotation eines Rotors, der mindestens ein Rotorblatt-Segment 6 umfasst, bereitgestellt ist, in elektrische Energie umwandelt. Diese Energie-Umwandlervorrichtung kann aber auch ein anderes Gerät wie z.B. eine Pumpe, ein Mahlwerk oder ähnliches sein. Figur 7 zeigt eine Windkraftanlage bzw. ein Windkraftsystem vom Typ Vertikalachsen-Windturbine 14 (VAWT), das mit einer Steuerungsvorrichtung 1 ausgestattet ist.

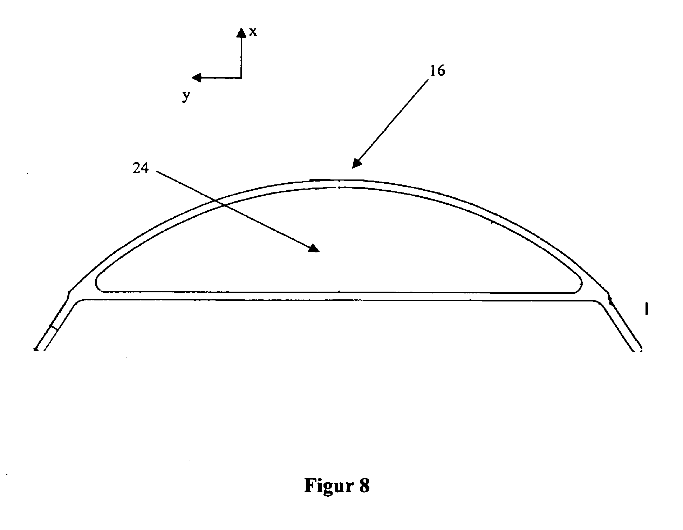

Außerdem ist in der erfindungsgemäßen VAWT eine Heizvorrichtung bereitgestellt. Diese Heizvorrichtung (Fig. 8) leitet einen Teil der Energie, welche die Energie-Umwandlervorrichtung bereitstellt in den Innenraum mindestens eines Rotorblatt-Segments 6, um mindestens ein Rotorblatt-Segment 6 zu heizen. Vorzugsweise wird von der Energie-Umwandlervorrichtung überschüssige Wärmeenergie abgeführt und direkt in de Innenraum von mindestens einem Rotorblattsegment geleitet. Gemäß einer Ausführungsform wird die Wärmeenergie nur an der Innenseite der Anströmkante 16 (Fig. 8) entlang geleitet, d.h. im vorderen Innenraumbereich 24 eines Rotorblatt-Segments 6 da die Eisbildung bekannterweise auf der Anströmkante 16 am stärksten ausgeprägt ist. Wenn es sich bei dieser Energie-Umwandlervorrichtung um einen Generator handelt, kann auch elektrische Energie des Generators genutzt werden, um den Innenraum mindestens eines Rotorblatt-Segments 6 zu heizen, wenn man damit im Innenraum eines Rotorblatt-Segments 6 eine elektrische Heizvorrichtung betreibt. Selbstverständlich können alle anwendbaren Energiearten zum Heizen des Innenraums eines Rotorblatt-Segments 6 verwendet und miteinander kombiniert werden, um für die Einzelanwendung ein optimales Heizen des Innenraums eines Rotorblatt-Segments 6 zu erreichen.

Alle zuvor beschriebenen Ausführungsformen, Varianten und Teilbereiche der vorliegenden Erfindung können miteinander kombiniert werden. Es können auch mehrere Steuerungsvorrichtungen 1 gemäß der vorliegenden Erfindung in Vertikalachsen-Windturbinen 14 verwendet werden, die einzeln oder gekoppelt betrieben werden können. Auch können Steuerungsvorrichtungen 1 gemäß der vorliegenden Erfindung unabhängig voneinander in einer Vertikalachsen-Windturbine 14 betrieben werden.

### Bezugszeichenliste:

- 1: Steuerungsvorrichtung
- 2: erste Komponente
- 3: Federelement
- 4: zweite Komponente
- 5: Massenelement
- 6: Rotorblatt-Segment
- 7: dritte Komponente
- 8: Aktuator
- 9: Begrenzer
- 10: Kopplungsvorrichtung
- 12: erste Teilkomponente
- 13: zweite Teilkomponente
- 14: Vertikalachsen-Windturbine
- 15: Rotationsachse
- 16: Anströmkante
- 17: Profilende
- 18: Verbindungselement
- 19: Rotationsachse des Torsionselements
- 20: Hebelarm
- 21: Anschlagarm
- 22: Strömungsschild
- 23: Scharniervorrichtung
- A: Verbindungspunkt für ein Verbindungselement 18 zwischen 4 und 22
- B: Verbindungspunkt für ein Verbindungselement 18 zwischen 4 und 22
- C: Verbindungspunkt für ein Verbindungselement 18 zwischen benachbarten Steuerungsvorrichtungen 1
- D: Verbindungspunkt für ein Verbindungselement 18 zwischen benachbarten Steuerungselementen 1
- E: Verbindungspunkt für ein Verbindungselement 18 zwischen 20 und Stellmotor

## Patentansprüche

1. Vertikalachsen-Windturbine (14) mit vertikaler Rotationsachse (15), umfassend:
mindestens ein Rotorblatt-Segment (6), das mindestens zwei ein- und ausfahrbare Strömungsschilde (22) aufweist, wobei das Rotorblatt-Segment (6) um die vertikale Rotationsachse (15) drehbar gelagert ist;
mindestens eine Steuerungsvorrichtung (1), um die Strömungsschilde (22) zu steuern,
wobei die Steuerungsvorrichtung (1) umfasst:
ein Federelement (3) und ein Masseelement (5), **dadurch gekennzeichnet dass**
das Massenelement (5) auf einer ersten Teilkomponente (12) vorgesehen ist, wobei die erste Teilkomponente (12) drehbar um eine Rotationsachse (19) gelagert ist; mindestens zwei Verbindungspunkte (A, B) auf der ersten Teilkomponente (12) vorgesehen sind, an denen jeweils ein Verbindungselement (18) angreift, welches die Steuerungsvorrichtung (1) mit jeweils einem Strömungsschild (22) der Vertikalachsen-Windturbine (14) verbindet;
wobei die Verbindungspunkte (A, B) derart auf der ersten Teilkomponente (12) angeordnet sind, dass sie bezüglich der Rotationsachse (19) einander im Wesentlichen gegenüberliegen und über die Verbindungselemente (18) bei einer Schwenkbewegung der Teilkomponente (12) bedingt durch das Angreifen einer Zentrifugalkraft an dem Massenelement (5), die Strömungsschilde (22) gegensätzlich zueinander steuern.

2. Vertikalachsen-Windturbine (14) gemäß Anspruch 1, wobei das Federelement (3) Teil einer ersten Komponente (2) und das Massenelement (5) der ersten Teilkomponente (12) Teil einer zweiten Komponente (4) ist und die Steuerungsvorrichtung (1) weiter eine dritte Komponente (7) umfasst, die einen Aktuator (8) aufweist und mit der zweiten Komponente (4) lösbar verbunden ist.

3. Vertikalachsen-Windturbine (14) gemäß Anspruch 2, wobei die erste Komponente (2) kraftübertragend mit der zweiten Komponente (4) verbunden ist.

4. Vertikalachsen-Windturbine (14) gemäß Anspruch 2 oder 3, wobei die zweite Komponente (4) durch Begrenzer (9) auf einen vorher festgelegten Einstellungsbereich begrenzt wird.

5. Vertikalachsen-Windturbine (14) gemäß Anspruch 2 bis 4, wobei die zweite Komponente (4) eine Kopplungsvorrichtung (10) umfasst, welche die zweite (4) und dritte Komponente (7) wahlweise koppelt oder entkoppelt.

6. Vertikalachsen-Windturbine (14) gemäß Anspruch 2 bis 4, wobei die dritte Komponente (7) eine Kopplungsvorrichtung (10) umfasst, welche die zweite (4) und dritte Komponente (7) wahlweise koppelt oder entkoppelt.

7. Vertikalachsen-Windturbine (14) gemäß Anspruch 2 bis 6, wobei die dritte Komponente (7) einen Stellmotor umfasst.

8. Vertikalachsen-Windturbine (14) gemäß Anspruch 5 bis 7, wobei die Kopplungsvorrichtung (10) durch Kopplung von zweiter (4) und dritter (7) Komponente das zentrifugalkraftbedingte Ausfahren der aerodynamischen Bremse verhindert.

9. Vertikalachsen-Windturbine (14) gemäß Anspruch 5 bis 8, wobei die Kopplungsvorrichtung (10) durch Entkopplung von zweiter (4) und dritter (7) Komponente ein zentrifugalkraftbedingtes Ausfahren der aerodynamischen Bremse ermöglicht.

10. Vertikalachsen-Windturbine (14) gemäß Anspruch 5 bis 9, wobei die dritte Komponente (7) die erste (2) und zweite Komponente (4) bewegen kann, solange die Kopplungsvorrichtung (10) die dritte Komponente (7) mit der zweiten Komponente (4) koppelt.

11. Vertikalachsen-Windturbine (14) gemäß Anspruch 5 bis 10, wobei die Kopplungsvorrichtung (10) eingerichtet ist, die zweite (4) und dritte Komponente (7) zu entkoppeln, wenn die dritte Komponente (7) zumindest teilweise versagt bzw. ausfällt.

12. Vertikalachsen-Windturbine (14) gemäß Anspruch 2 bis 12, wobei das Federelement (3) ein Torsionselement ist.

13. Vertikalachsen-Windturbine (14) gemäß Anspruch 1 bis 12 wobei die erste Teilkomponente (12) zwischen dem ersten und zweiten Ende der ersten Teilkomponente (12) senkrecht zur Rotationsachse fest mit dem Federelement (3) verbunden ist.

14. Vertikalachsen-Windturbine (14) gemäß Anspruch 2 bis 13, wobei die zweite Komponente (4) weiter aufweist:
eine zweite Teilkomponente (13), die zwischen dem ersten und dem zweiten Ende der zweiten Teilkomponente (13) senkrecht zur Rotationsachse und senkrecht zur ersten Teilkomponente (12) fest mit dem Federelement (3) verbunden ist.

15. Vertikalachsen-Windturbine (14) gemäß irgendeinem der Ansprüche 1 bis 14, wobei das Federelement (3) von einer Anströmkante (16) des Rotorblatt-Segments (6) zu einem Profilende (17) des Rotorblatt-Segments (6) verläuft.

16. Vertikalachsen-Windturbine (14) gemäß irgendeinem der vorhergehenden Ansprüche 1 bis 15, wobei die Strömungsschilde (22) derart an einer Außenfläche des Rotorblatt-Segments (6) positioniert sind, dass die Ebene der Strömungsschilde (22) von einer Position parallel zur Rotationsrichtung des Rotorblatt-Segments (6) wahlweise bis zu einer Position senkrecht zur Rotationsrichtung des Rotorblatt-Segments (6) ausfahrbar sind, so dass die Strömungsschilde (22) sich senkrecht zur Antriebsströmung befinden.

17. Vertikalachsen-Windturbine (14) gemäß irgendeinem der vorhergehenden Ansprüche 1 bis 16, wobei die zweite Komponente (4) mit ihrem Massenelement (5) derart positioniert ist, dass das Massenelement (5) bei Drehung des Rotors durch die Zentrifugalkraft radial nach außen bewegt wird.

18. Vertikalachsen-Windturbine (14) gemäß irgendeinem der vorhergehenden Ansprüche 2 bis 17, wobei die dritte Komponente (7) weiter aufweist:
ein Rückstellelement, das den Aktuator (8) veranlasst, die aerodynamische Bremse gegen die Vorspannung des Federelements (3) auszufahren, wenn der Aktuator (8) nicht angesteuert wird.

19. Vertikalachsen-Windturbine (14) gemäß irgendeinem der vorhergehenden Ansprüche 1 bis 18, mit mehreren Steuerungsvorrichtungen (1), wobei die Steuerungsvorrichtungen (1) über mindestens eine Verbindungsvorrichtung gekoppelt sind, um Drehbewegungen der zweiten Komponenten untereinander zu übertragen.

20. Vertikalachsen-Windturbine (14) gemäß irgendeinem der vorhergehenden Ansprüche 1 bis 19, weiter umfassend:
mindestens eine Energie-Umwandlervorrichtung.

21. Vertikalachsen-Windturbine (14) gemäß irgendeinem der vorhergehenden Ansprüche 1 bis 20, weiter umfassend:
eine Heizvorrichtung, die eingerichtet ist, Energie einer Energieumwandlervorrichtung in den Innenraum des Rotorblatt-Segments (6) zu leiten und **dadurch** das Rotorblatt-Segment von Innen zu Heizen.

22. Verfahren zum aerodynamischen Bremsen einer Vertikalachsen-Windturbine (14) gemäß Anspruch 1 bis 21, umfassend:
Entkoppeln der zweiten Komponente (4) von der dritten Komponente (7);
Ausfahren der Strömungsschilde (22) im Wesentlichen in eine Position bis senkrecht zur Rotationsrichtung des Rotorblatt-Segments (6) durch Bewegen der zweiten Komponente (4) mittels Zentrifugalkraft;
Verändern der Strömungseigenschaften des Rotorblatt-Segments (6), um die Antriebsströmung der Vertikalachsen-Windturbine (14) zumindest teilweise zu unterbrechen.

23. Verfahren gemäß Anspruch 22, wobei das Entkoppeln durch einen Versagen der dritten Komponente (7) ausgelöst wird.

24. Verfahren gemäß Anspruch 22 oder 23, wobei das Entkoppeln durch Unterbrechung eines elektrischen Stroms in der Kopplungsvorrichtung (10) ausgelöst wird.

25. Verfahren gemäß irgendeinem der Ansprüche 22 bis 24, wobei die zumindest teilweise Unterbrechung der Antriebsströmung eine Teilbremsung oder eine Vollbremsung der Vertikalachsen-Windturbine (14) veranlasst.

## Claims

1. A vertical axis wind turbine (14) with a vertical axis of rotation (15), comprising:
at least one rotor blade segment (6), which has at least retractable and extendable flow plates (22), wherein
the rotor blade segment (6) is supported such that it can rotate about the vertical axis of rotation (15);
at least one control device (1), in order to control the flow plates (22), wherein
the control device (1) comprises:
a spring element (3) and a mass element (5),
**characterised in that** the mass element (5) is provided on a first sub-component (12), wherein
the first sub-component (12) is supported such that it can rotate about an axis of rotation (19);
at least two connection points (A, B) are provided on the first sub-component (12), in each of which one connecting element (18) engages, which in each case connects the control device (1) with one flow plate (22) of the vertical axis wind turbine (14); wherein
the connection points (A, B) are arranged on the first sub-component (12), such that they are essentially opposed to one another with reference to the axis of rotation (19), and control the flow plates (22) in opposite senses to one another via the connecting elements (18) with a pivotal movement of the sub-component (12) conditioned by the action of a centrifugal force on the mass element (5).

2. The vertical axis wind turbine (14) according to claim 1, wherein
the spring element (3) is part of a first component (2), and the mass element (5) of the first sub-component (12) is part of a second component (4), and the control device (1) further comprises a third component (7), which has an actuator (8) and is releasably connected with the second component (4).

3. The vertical axis wind turbine (14) according to claim 2, wherein
the first component (2) is connected with the second component (4) in a force transmitting manner.

4. The vertical axis wind turbine (14) according to claim 2 or 3, wherein
the second component (4) is limited to a previously defined range of adjustment by means of a limiter (9).

5. The vertical axis wind turbine (14) according to claims 2 to 4, wherein
the second component (4) comprises a coupling device (10), which couples or decouples the second (4) and third components (7) as required.

6. The vertical axis wind turbine (14) according to claims 2 to 4, wherein
the third component (7) comprises a coupling device (10), which couples or decouples the second (4) and third components (7) as required.

7. The vertical axis wind turbine (14) according to claims 2 to 6, wherein
the third component (7) comprises a servomotor.

8. The vertical axis wind turbine (14) according to claims 5 to 7, wherein
by means of the coupling of the second (4) and third (7) components the coupling device (10) prevents the extension outwards of the aerodynamic brake as conditioned by centrifugal force.

9. The vertical axis wind turbine (14) according to claims 5 to 8, wherein
by means of the decoupling of the second (4) and third (7) components the coupling device (10) enables an extension outwards of the aerodynamic brake as conditioned by centrifugal force.

10. The vertical axis wind turbine (14) according to claims 5 to 9, wherein
the third component (7) can move the first (2) and second components (4), as long as the coupling device (10) is coupling the third component (7) with the second component (4).

11. The vertical axis wind turbine (14) according to claims 5 to 10, wherein
the coupling device (10) is equipped to decouple the second (4) and third components (7) if the third component (7), at least partially failed, drops out.

12. The vertical axis wind turbine (14) according to claims 2 to 12, wherein
the spring element (3) is a torsional element.

13. The vertical axis wind turbine (14) according to claims 1 to 12, wherein
the first sub-component (12) is securely connected with the spring element (3), at right angles to the axis of rotation, between the first and second ends of the first subcomponent (12).

14. The vertical axis wind turbine (14) according to claims 2 to 13, wherein
the second component (4) further has:
a second sub-component (13), which is securely connected with the spring element (3), at right angles to the axis of rotation and at right angles to the first sub-component (12), between the first and second ends of the second sub-component (13).

15. The vertical axis wind turbine (14) according to any of the claims 1 to 14, wherein
the spring element (3) runs from a leading edge (16) of the rotor blade segment (6) to a profile end (17) of the rotor blade segment (6).

16. The vertical axis wind turbine (14) according to any of the previous claims 1 to 15, wherein
the flow plates (22) are positioned on an outer surface of the rotor blade segment (6) such that the plane of the flow plates (22) can be extended outwards from a position parallel to the direction of rotation of the rotor blade segment (6) to a position at right angles to the direction of rotation of the rotor blade segment (6) as required, such that the flow plates (22) are located at right angles to the incident flow.

17. The vertical axis wind turbine (14) according to any of the previous claims 1 to 16, wherein
the second component (4) with its mass element (5) is positioned such that in the event of rotation of the rotor the mass element (5) is moved radially outwards by the centrifugal force.

18. The vertical axis wind turbine (14) according to any of the previous claims 2 to 17, wherein
the third component (7) further has:
a restoring element, which causes the actuator (8) to extend the aerodynamic brake 10 outwards against the pre-tension of the spring element (3), if the actuator (8) is not activated.

19. The vertical axis wind turbine (14) according to any of the previous claims 1 to 18, with a plurality of control devices (1), wherein
the control devices (1) are coupled via at least one connecting device, to transfer rotational movements of the second components between one another.

20. The vertical axis wind turbine (14) according to any of the previous claims 1 to 19, further comprising:
at least one energy converter device.

21. The vertical axis wind turbine (14) according to any of the previous claims 1 to 20, further comprising:
a heating device, which is equipped to conduct energy from an energy converter device into the interior of the rotor blade segment (6) and by this means to heat the rotor blade segment internally.

22. A method for the aerodynamic braking of a vertical axis wind turbine (14) according to claims 1 to 21, comprising:
decoupling the second component (4) from the third component (7);
outwards extension of the flow plates (22), essentially into a position up to one at right angles to the direction of rotation of the rotor blade segment (6), by movement of the second component (4) by means of centrifugal force;
modification of the flow properties of the rotor blade segment (6), so as to interrupt, at least partially, the incident flow of the vertical axis wind turbine (14).

23. The method according to claim 22, wherein
the decoupling is triggered by a failure of the third component (7).

24. The method according to claim 22 or 23, wherein
the decoupling is triggered by an interruption of an electrical current in the coupling device (10).

25. The method according to any of the claims 22 to 24, wherein
the at least partial interruption of the incident flow causes partial braking or full braking of the vertical axis wind turbine (14).

## Revendications

1. Eolienne à axe vertical (14) avec un axe de rotation vertical (15), comprenant :
au moins un segment de lame de rotor (6) qui présente au moins deux réducteurs de flux (22) escamotables, sachant que le segment de lame de rotor (6) est positionné de manière rotative sur l'axe de rotation vertical (15) ;
au moins un dispositif de commande (1) pour commander les réducteurs de flux (22), sachant que le dispositif de commande (1) comprend :
un élément à ressort (3) et un élément de masse (5), **caractérisé en ce que** l'élément de masse (5) est prévu sur un premier composant partiel (12), sachant que le premier composant partiel (12) est placé de manière rotative sur un axe de rotation (19) ;
au moins deux points de liaison (A, B) sont prévus sur le premier composant partiel (12), sur lesquels respectivement se met en prise un élément de liaison (18) qui relie le dispositif de commande (1) à chacun des réducteurs de flux (22) de l'éolienne à axe vertical (14) ;
sachant que les points de liaison (A, B) sont ainsi placés sur le premier composant partiel (12) qu'ils se font face essentiellement l'un à l'autre par rapport à l'axe de rotation (19) et, via les éléments de liaison (18), lors d'un pivotement du premier composant partiel (12) due à l'action d'une force centrifuge sur l'élément de masse (5), commandent les réducteurs de flux (22) de manière opposée l'un à l'autre.

2. Eolienne à axe vertical (14) selon la revendication 1, dans laquelle l'élément à ressort (3) fait partie d'un premier composant (2) et l'élément de masse (5) du premier composant partiel (12) fait partie d'un deuxième composant (4) et le dispositif de commande (1) comprend en outre un troisième composant (7) qui présente un déclencheur (8) et est relié de manière séparable au deuxième composant (4).

3. Eolienne à axe vertical (14) selon la revendication 2, dans laquelle le premier composant (2) est relié par transmission de force au deuxième composant (4).

4. Eolienne à axe vertical (14) selon la revendication 2 ou 3, dans laquelle le deuxième composant (4) est délimité par des limitateurs (9) sur une zone de réglage prédéfinie.

5. Eolienne à axe vertical (14) selon l'une des revendications 2 à 4, dans laquelle le deuxième composant (4) comprend un dispositif de couplage (10) qui accouple ou désaccouple au choix le deuxième (4) et le troisième composant (7).

6. Eolienne à axe vertical (14) selon l'une des revendications 2 à 4, dans laquelle le troisième composant (7) comprend un dispositif de couplage (10) qui accouple ou désaccouple au choix le deuxième (4) et le troisième composant (7).

7. Eolienne à axe vertical (14) selon l'une des revendications 2 à 6, dans laquelle le troisième composant (7) comprend un servomoteur.

8. Eolienne à axe vertical (14) selon l'une des revendications 5 à 7, dans laquelle le dispositif de couplage (10), par l'accouplement des deuxième (4) et troisième (7) composants, empêche la sortie du frein aérodynamique due à la force centrifuge.

9. Eolienne à axe vertical (14) selon l'une des revendications 5 à 8, dans laquelle le dispositif de couplage (10), par désaccouplement des deuxième (4) et troisième (7) composant, permet une sortie du frein aérodynamique due à la force centrifuge..

10. Eolienne à axe vertical (14) selon l'une des revendications 5 à 9, dans laquelle le troisième composant peut déplacer les premier (2) et deuxième composants (4) tant que le dispositif de couplage (10) accouple le troisième composant (7) avec le deuxième composant (4).

11. Eolienne à axe vertical (14) selon l'une des revendications 5 à 10, dans laquelle le dispositif de couplage (10), est agencé pour désaccoupler les deuxième (4) et troisième composants (7) lorsque le troisième composant (7) est au moins partiellement défaillant respectivement en panne.

12. Eolienne à axe vertical (14) selon l'une des revendications 2 à 12, dans laquelle l'élément à ressort (3) est un élément de torsion.

13. Eolienne à axe vertical (14) selon l'une des revendications 1 à 12, dans laquelle le premier composant partiel (12) est relié fixement à l'élément à ressort (3) perpendiculairement à l'axe de rotation entre les première et deuxième extrémités du premier composant partiel (12).

14. Eolienne à axe vertical (14) selon l'une des revendications 2 à 13, dans laquelle le deuxième composant (4) présente en outre : un deuxième composant partiel (13) relié fixement à l'élément à ressort (3) perpendiculairement à l'axe de rotation et perpendiculairement au premier composant partiel (12) entre les première et deuxième extrémités du deuxième composant partiel (13).

15. Eolienne à axe vertical (14) selon l'une quelconque des revendications 1 à 14, dans laquelle l'élément à ressort (3) s'étend d'un bord d'attaque (16) du segment de lame de rotor (6) vers une extrémité profilée (17) du segment de lame de rotor (6).

16. Eolienne à axe vertical (14) selon l'une quelconque des revendications précédentes 1 à 15, dans laquelle les réducteurs de flux (22) sont ainsi positionnés sur une face extérieure du segment de lame de rotor (6) que le plan des réducteurs de flux (22) peut être sorti d'une position parallèle au sens de rotation du segment de lame de rotor (6) au choix jusqu'à une position perpendiculaire au sens de rotation du segment de lame de rotor (6) de façon à ce que les réducteurs de flux (22) se trouvent perpendiculaires au flux d'entraînement.

17. Eolienne à axe vertical (14) selon l'une quelconque des revendications précédentes 1 à 16, dans laquelle le deuxième composant (4) est ainsi positionné avec son élément de masse (5) que l'élément de masse (5) est déplacé radialement vers l'extérieur par la force centrifuge lors de la rotation du rotor.

18. Eolienne à axe vertical (14) selon l'une quelconque des revendications précédentes 2 à 17, dans laquelle le troisième composant (7) présente en outre : un élément de rappel qui fait sortir par le déclencheur (8) le frein aérodynamique contre la précontrainte de l'élément à ressort (3) lorsque le déclencheur (8) n'est pas commandé.

19. Eolienne à axe vertical (14) selon l'une quelconque des revendications précédentes 1 à 18, comprenant plusieurs dispositifs de commande (1), dans laquelle les dispositifs de commande (1) sont couplés par au moins un dispositif de liaison afin de transmettre entre eux les rotations du deuxième composant.

20. Eolienne à axe vertical (14) selon l'une quelconque des revendications précédentes 1 à 19, comprenant en outre : au moins un dispositif convertisseur d'énergie.

21. Eolienne à axe vertical (14) selon l'une quelconque des revendications précédentes 1 à 20, comprenant en outre : un dispositif de chauffage agencé pour conduire l'énergie d'un dispositif convertisseur d'énergie dans l'espace intérieur du segment de lame de rotor (6) et chauffer ainsi le du segment de lame de rotor de l'intérieur.

22. Procédé de freinage aérodynamique d'une éolienne à axe vertical (14) selon les revendications 1 à 21, comprenant : le désaccouplement du deuxième composant (4) du troisième composant (7) ; la sortie des réducteurs de flux (22) essentiellement dans une position jusqu'à la verticale par rapport au sens de rotation du segment de lame de rotor (6) par le déplacement du deuxième composant (4) via la force centrifuge ; la modification des propriétés d'écoulement du segment de lame de rotor (6) afin d'interrompre au moins partiellement le flux d'entraînement de l'éolienne à axe vertical (14).

23. Procédé selon la revendication 22, dans lequel le désaccouplement est déclenché par une défaillance du troisième composant (7).

24. Procédé selon la revendication 22 ou 23, dans lequel le désaccouplement est déclenché par une interruption du courant électrique dans le dispositif de couplage (10).

25. Procédé selon l'une quelconque des revendications 22 à 24, dans lequel l'interruption au moins partielle du flux d'entraînement provoque un freinage partiel ou un freinage complet de l'éolienne à axe vertical (14).
